# EUROPEAN PATENT APPLICATION

(11) **EP 1 098 190 A2**
(43) Date of publication of application: **09.05.2001**
(21) Application number: 00123944.1
(22) Date of filing: 03.11.2000
(51) Int. Cl.: G01N 21/956

(54) **Illumination and image acquistion system**

(30) Priority: 08.11.1999 IL 13281799
(71) Applicant: Orbotech-Schuh-GmbH & Co., KG, 31812 Bad Pyrmont (DE)
(72) Inventor: Menning, Hermann, 32676 Ludge (DE)
(74) Representative: Kuhnen & Wacker

(57) **Abstract**

This invention discloses an illumination and image acquisition system including a plurality of color flash lights operative to illuminate an article to be inspected, and at least one black-and-white camera operative to acquire an optical image of the article as illuminated by the color flash lights.

A method for providing light generally at a constant level of luminance is also disclosed.

## Description

### FIELD OF THE INVENTION

The present invention relates generally to illumination and image acquisition systems and particularly to a color flash assembly for such systems.

### BACKGROUND OF THE INVENTION

Automated optical inspection (AOI) systems are typically used to inspect items in the electronics assembly industry, such as printed circuit boards (PCB's), which may be populated (i.e., onto which components are mounted) or bare (i.e., which have no components mounted thereon). PCBs may be inspected after any step of assembly of components onto the PCB, such as after paste print, after component placement and/or after soldering.

Many AOI systems for inspecting populated PCBs employ various kinds of illumination at various positions around and above the PCB. Color filters in cooperation with CCD cameras are typically used to acquire optical images of the PCB. Other AOI systems employ color CCD cameras. As is well known in the art, color camera systems generally operate by transmitting signals corresponding to one of three colors, typically red, green and blue (RGB). The frequency and phase of these signals are processed by color receiver circuitry, and must be registered properly with respect to each other in order to reproduce the transmitted picture as faithfully as possible.

In highly accurate AOI systems, however, the color cameras pose a problem. No color camera system is perfect, and there are inevitable discrepancies in mutual registration among the colors. Another problem lies in the need for highly accurate AOI systems to acquire images under controlled conditions. Images are a function of the intensity of light reflected off a surface under inspection. Consequently, variations in the level of luminance applied during image acquisition tend to make comparison and analysis of multiple images, such as for determining the presence of defects, extremely complicated and difficult.

### SUMMARY OF THE INVENTION

The present invention seeks to provide a novel and elegant solution to the abovementioned problem of the art. The present invention employs a plurality of color flash lights (typically three lights - red, green and blue) to illuminate the inspected article, and black-and-white cameras to acquire the optical images. Unlike color cameras, black-and-white cameras do not mutually register signals in different color spectra, and so the registration problems of the prior art are eliminated. The colored-flash illumination of the inspected article is perceived by the black-and-white cameras in a highly accurate gray scale. Preferably fast flashes of very intense light are employed such that the interval of image acquisition of the black-and-white cameras is longer than the flash time.

A control system is also provided for stabilizing and maintaining the illumination flashes at a constant and controlled level of luminance.

There is thus provided in accordance with a preferred embodiment of the present invention an illumination and image acquisition system including a plurality of color flash lights operative to illuminate an article to be inspected, and at least one black-and-white camera operative to acquire an optical image of the article as illuminated by the color flash lights.

In accordance with a preferred embodiment of the present invention the color flash lights include three differently colored lights. Preferably the color flash lights include a red flash light, a green flash light and a blue flash light.

Further in accordance with a preferred embodiment of the present invention a flash time of the color flash lights is such that an interval of image acquisition of the at least one black-and-white camera is longer than the flash time.

Still further in accordance with a preferred embodiment of the present invention a control system is provided for stabilizing and maintaining color flashes of the color flash lights generally at a constant level of luminance.

In accordance with a preferred embodiment of the present invention the control system includes a flash power supply which powers the plurality of color flash lights, a light sensor in optical communication with the plurality of color flash lights, a processor in communication with the light sensor, the light sensor transmitting a signal containing information about a luminance of the color flash lights to the processor, the processor processing the information and providing a processed value, and a comparator in communication with the processor which compares the processed value with a control value for desired luminance, the comparator shutting down the flash power supply if the processed value is greater than or equal to the control value.

There is also provided in accordance with a preferred embodiment of the present invention a method for providing light generally at a constant level of luminance, the method including powering a plurality of flash lights, sensing characteristic light information of the flash lights, processing the information to arrive at a processed value of a luminance of the flash lights, comparing the processed value with a control value for desired luminance, and shutting down the flash lights if the processed value is greater than or equal to the control value.

### BRIEF DESCRIPTION OF THE DRAWINGS

The present invention will be understood and appreciated more fully from the following detailed description, taken in conjunction with the drawings in which:
Fig. 1 is a simplified pictorial illustration of an illumination and image acquisition system constructed and operative in accordance with a preferred embodiment of the present invention; and
Fig. 2 is a simplified block diagram of a control system for stabilizing and maintaining color flashes of flash lights at a constant level of luminance, constructed and operative in accordance with a preferred embodiment of the present invention, useful with the illumination and image acquisition system of Fig. 1.

### DETAILED DESCRIPTION OF A PREFERRED EMBODIMENT

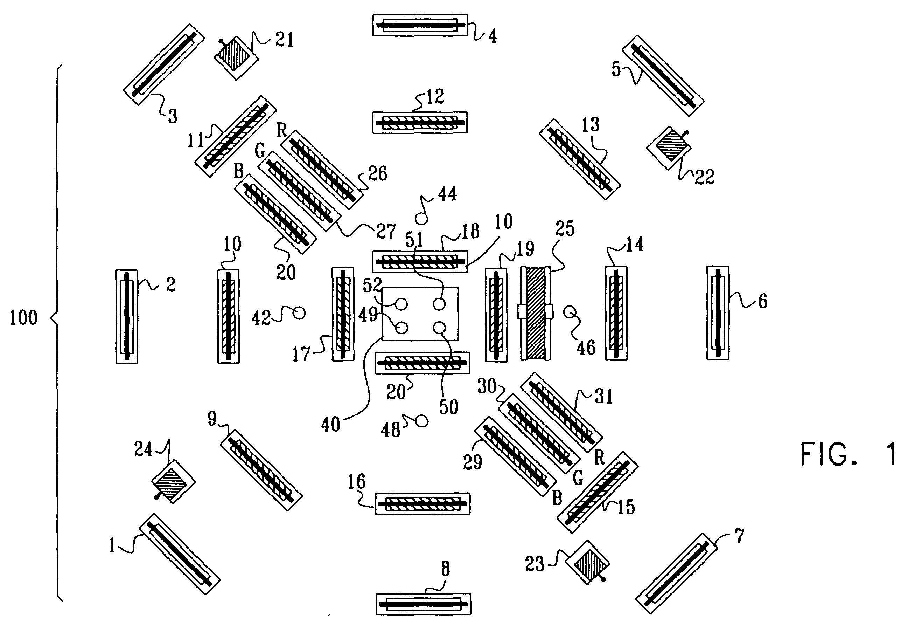

Reference is now made to Fig. 1 which illustrates an illumination and image acquisition system 100 constructed and operative in accordance with a preferred embodiment of the present invention.

System 100 is particularly suited for inspecting various assembly steps of a PCB. System 100 preferably includes a plurality of lights spaced about and/or above an article 40 which is to be inspected, such as a PCB. The plurality of lights may include, for example, eight flash lights illuminating at a relatively low level of illumination 1, 2, 3, 4, 5, 6, 7 and 8, and eight flash lights illuminating at a relatively high level of illumination 9, 10, 11, 12, 13, 14, 15 and 16, spaced generally equally about article 40; four central flash lights 17, 18, 19 and 20, spaced generally equally overhead and close to article 40; four diffuse flash lights 21, 22, 23 and 24 spaced generally equally about article 40; and a line projector 25 positioned near article 40. It is appreciated that all of the lights may be placed at any convenient height and angle with respect to article 40 as required, and that any other number or variety of lights may be employed as well.

In accordance with a preferred embodiment of the present invention, a plurality of color flash lights 26, 27 and 28 are provided which illuminate article 40. Preferably another set of color flash lights 29, 30 and 31 are also provided, each set of color flash lights preferably being at opposite comers or sides of article 40. Color flash lights 26-31 may be high intensity flash lights, e.g., xenon flash lights. In the illustrated embodiment, each plurality of color flash lights includes three differently colored lights, namely, red flash lights 26 and 29, green flash lights 27 and 30, and blue flash lights 28 and 31. The two pluralities of lights may be arranged such that one or more identical colors generally face each other (e.g., green flash lights 27 and 30), or that different colors generally face each other (e.g., red flash light 26 and blue flash light 31, or red flash light 29 and blue flash light 28).

Illumination and image acquisition system 100 preferably includes one or more black-and-white cameras, such as cameras 42, 44, 46 and 48, spaced generally equally about and above article 40, and optionally, an array of one or more cameras above article 40, such as cameras 49, 50, 51 and 52, for example. It is appreciated that all of the black-and-white cameras may be placed at any convenient height and angle with respect to article 40 as required, and that any other number of black-and-white cameras may be employed as well. The black-and-white cameras 42, 44, 46, 48, 49, 50, 51 and 52 acquire a sequence of optical images of article 40 as illuminated by the flashes 1-25 and color flash lights 26-31. The flash time of the flash lights is preferably very fast, such that an interval of image acquisition of the black-and-white cameras is longer than the flash time of the flash lights. The images acquired by cameras 42, 44, 46, 48, 49, 50, 51 and 52 are sent to a computerized image processor (not shown) that processes and analyzes the images to determine defects on the PCB.

The colored-flash illumination of article 40 is perceived by the black-and-white cameras in a highly accurate gray scale with accurate and sharp contrast, thereby providing a highly accurate AOI system which is less expensive than AOI systems with color cameras. Moreover, the color registration problem of such color camera systems is substantially eliminated because the same black-and-white camera acquires, in temporal sequence, red, green and blue images which may be precisely registered to obtain a color image as desired.

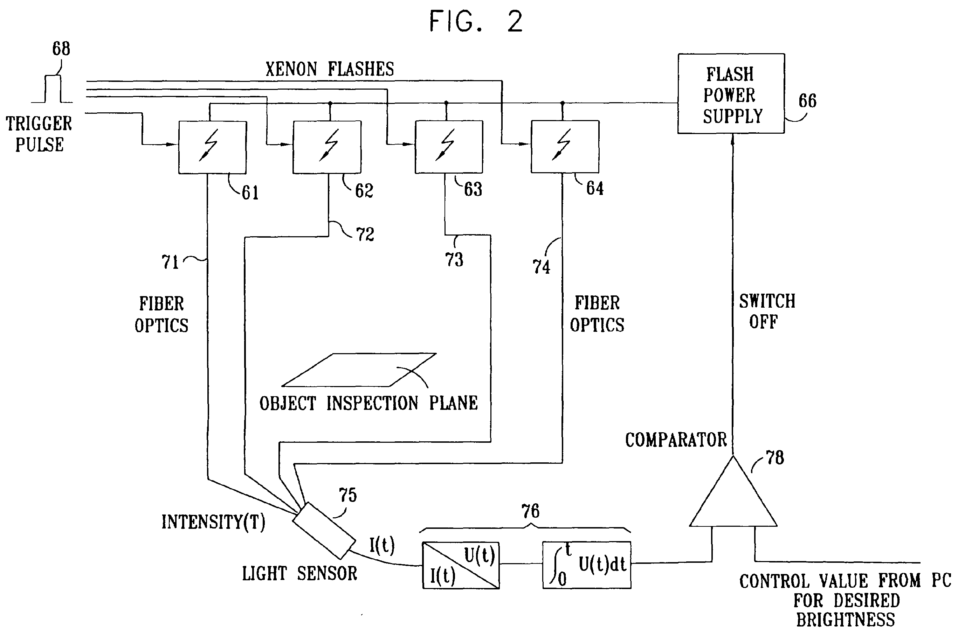

Reference is now made to Fig. 2 which illustrates a control system 60 for providing light generally at a constant level of luminance, constructed and operative in accordance with a preferred embodiment of the present invention, and useful with the illumination and image acquisition system 100 of Fig. 1. Control system 60 may be used to stabilize and maintain a generally constant level of luminance for flashes 1-25 and color flashes 26-31 (Fig. 1).

A plurality of flash lights, such as lights 61, 62, 63 and 64, are connected to and powered by a flash power supply 66. Flash lights 61, 62, 63 and 64 are preferably xenon flash lights which are triggered by a trigger pulse 68. Flash lights 61, 62, 63 and 64 are preferably connected by fiber optic cables (or any other suitable optical waveguide) 71, 72, 73 and 74 to a light sensor 75 (more than one light sensor may also be employed). Light sensor 75 transmits a signal containing information about a luminance of the flash lights 61, 62, 63 and 64, as a function of time, to a processor 76.

The luminance is defined as the luminous intensity in a given direction of a small element of surface area divided by the orthogonal projection of this area onto a plane at right angles to the direction. The luminous intensity is a measure of the amount of light that a point source radiates in a given direction, and is expressed by the luminous flux leaving the source in that direction per unit of solid angle.

Processor 76 integrates the time function of the luminance of the flash lights and the integrated value is sent to a comparator 78 which compares the integrated value with a control value for desired luminance. As soon as the integrated value reaches or exceeds the control value, flash power supply 66 is signaled by comparator 78 to shut down, thereby stabilizing and maintaining the flashes of the flash lights 61-64 at a generally constant level of luminance. Control system 60 thus acts as a feedback to flash power supply 66 for maintaining a constant level of luminance.

It will be appreciated by persons skilled in the art that the present invention is not limited by what has been particularly shown and described hereinabove. Rather the scope of the present invention includes both combinations and subcombinations of the features described hereinabove as well as modifications and variations thereof which would occur to a person of skill in the art upon reading the foregoing description and which are not in the prior art.

## Claims

1. An illumination and image acquisition system comprising:
a plurality of color flash lights operative to illuminate an article to be inspected; and
at least one black-and-white camera operative to acquire an optical image of the article as illuminated by said color flash lights.

2. The system according to claim 1 wherein said color flash lights comprise three differently colored lights.

3. The system according to claim 1 or claim 2 wherein said color flash lights comprise a red flash light, a green flash light and a blue flash light.

4. The system according to any of the preceding claims wherein a flash time of said color flash lights is such that an interval of image acquisition of said at least one black-and-white camera is longer than said flash time.

5. The system according to any of the preceding claims and further comprising a control system for stabilizing and maintaining color flashes of said color flash lights generally at a constant level of luminance.

6. The system according to claim 5 wherein said control system comprises: a flash power supply which powers said plurality of color flash lights;
a light sensor in optical communication with said plurality of color flash lights;
a processor in communication with said light sensor, said light sensor transmitting a signal containing information about a luminance of said color flash lights to said processor, said processor processing said information and providing a processed value; and
a comparator in communication with said processor which compares said processed value with a control value for desired luminance, said comparator shutting down said flash power supply if said processed value is greater than or equal to the control value.

7. A method for providing light generally at a constant level of luminance, the method comprising:
powering a plurality of flash lights;
sensing characteristic light information of said flash lights;
processing said information to arrive at a processed value of a luminance of said flash lights;
comparing said processed value with a control value for desired luminance; and
shutting down said flash lights if said processed value is greater than or equal to the control value.
